# EUROPEAN PATENT APPLICATION

(11) **EP 4 694 000 A1**
(43) Date of publication of application: **11.02.2026**
(21) Application number: 24781206.8
(22) Date of filing: 27.03.2024
(51) Int. Cl.: H04L 5/00, H04L 5/22, H04W 72/25, H04W 72/04, H04W 72/56, H04W 72/54, H04L 1/18

(54) **TRANSMISSION METHOD AND DEVICE USING MULTIPLE CARRIER WAVES**

(30) Priority: 29.03.2023 KR 20230041399; 29.03.2023 KR 20230041442; 30.03.2023 KR 20230042230; 30.03.2023 KR 20230042245; 03.04.2023 KR 20230043671; 03.04.2023 US 202363456796 P; 18.07.2023 KR 20230093359
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR)
(74) Representative: Plasseraud IP
(86) International application number: PCT/KR2024/003822
(87) International publication number: WO 2024/205215

(57) **Abstract**

A method by which a first device (100) operates in a wireless communication system is presented. The method may comprise the steps of: acquiring information about aggregated carrier waves; and performing inter-device transmission for a second device by using the aggregated carrier waves, wherein the aggregated carrier waves include a first carrier wave and a second carrier wave, and it could be expected that first information about a symbol that can be used for inter-device communication included in the first carrier wave is configured to be the same as second information about a symbol that can be used for inter-device communication included in the second carrier wave.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method for performing, by a first device, wireless communication may be proposed. For example, the method may comprise: obtaining information for an aggregated carrier; and performing, to a second device, an inter-device transmission by using the aggregated carrier, wherein the aggregated carrier may include a first carrier and a second carrier, and wherein first information for a symbol included in the first carrier, which can be used in an inter-device communication may be expected to be configured to be the same as second information for a symbol included in the second carrier, which can be used in an inter-device communication.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: obtaining information for an aggregated carrier; and performing, to a second device, an inter-device transmission by using the aggregated carrier, wherein the aggregated carrier may include a first carrier and a second carrier, and wherein first information for a symbol included in the first carrier, which can be used in an inter-device communication may be expected to be configured to be the same as second information for a symbol included in the second carrier, which can be used in an inter-device communication.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: obtaining information for an aggregated carrier; and performing, to a second UE, an inter-UE transmission by using the aggregated carrier, wherein the aggregated carrier may include a first carrier and a second carrier, and wherein first information for a symbol included in the first carrier, which can be used in an inter-UE communication may be expected to be configured to be the same as second information for a symbol included in the second carrier, which can be used in an inter-UE communication.

According to an embodiment of the present disclosure, a non-transitory computer-readable storage medium storing instructions may be proposed. For example, the instructions, based on being executed, may cause a first device to: obtain information for an aggregated carrier; and perform, to a second device, an inter-device transmission by using the aggregated carrier, wherein the aggregated carrier may include a first carrier and a second carrier, and wherein first information for a symbol included in the first carrier, which can be used in an inter-device communication may be expected to be configured to be the same as second information for a symbol included in the second carrier, which can be used in an inter-device communication.

According to an embodiment of the present disclosure, a method for performing, by a second device, wireless communication may be proposed. For example, the method may comprise: obtaining information for an aggregated carrier; and receiving, from a first device, an inter-device transmission by using the aggregated carrier, wherein the aggregated carrier may include a first carrier and a second carrier, and wherein first information for a symbol included in the first carrier, which can be used in inter-device communication may be expected to be configured to be the same as second information for a symbol included in the second carrier, which can be used in inter-device communication.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: obtaining information for an aggregated carrier; and receiving, from a first device, an inter-device transmission by using the aggregated carrier, wherein the aggregated carrier may include a first carrier and a second carrier, and wherein first information for a symbol included in the first carrier, which can be used in inter-device communication may be expected to be configured to be the same as second information for a symbol included in the second carrier, which can be used in inter-device communication.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a frequency band in carrier aggregation according to an embodiment of the present disclosure.
FIG. 10 shows an alignment of inter-UE physical feedback channel (e.g., PSFCH) symbols in carrier aggregation according to an embodiment of the present disclosure.
FIG. 11 shows a procedure for a first device to perform wireless communication, according to one embodiment of the present disclosure.
FIG. 12 shows a procedure for a second device to perform wireless communication, according to one embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

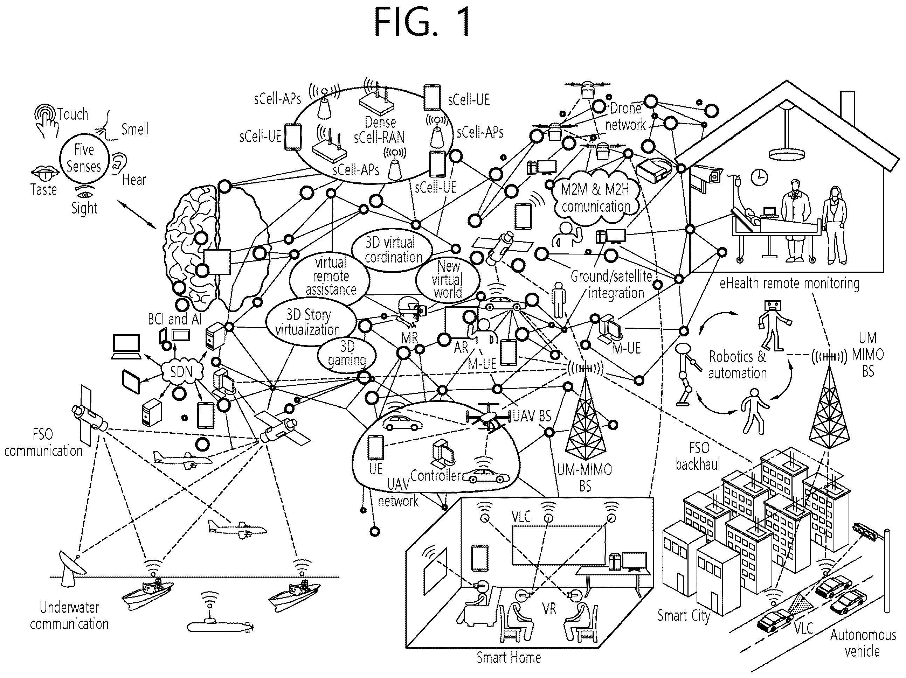

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

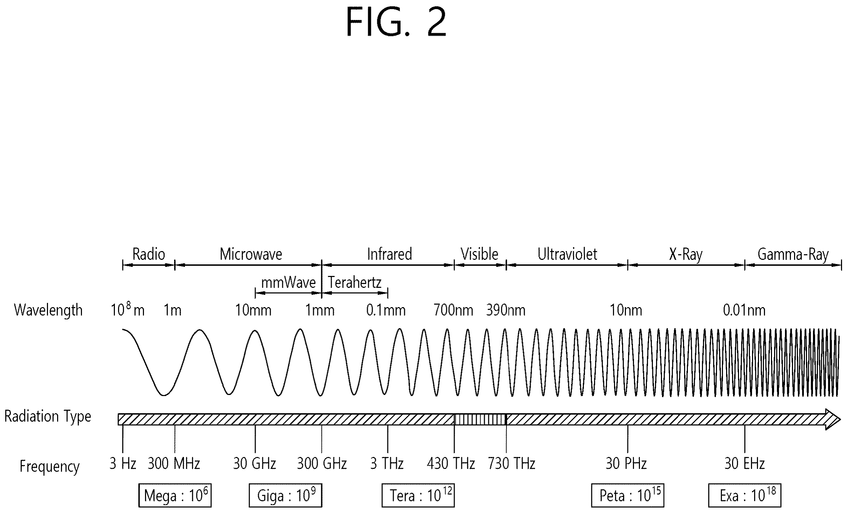

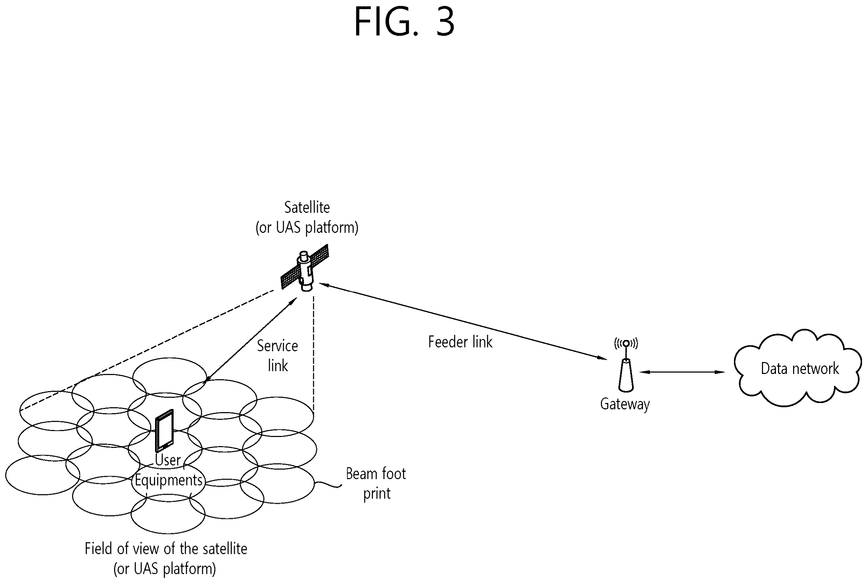

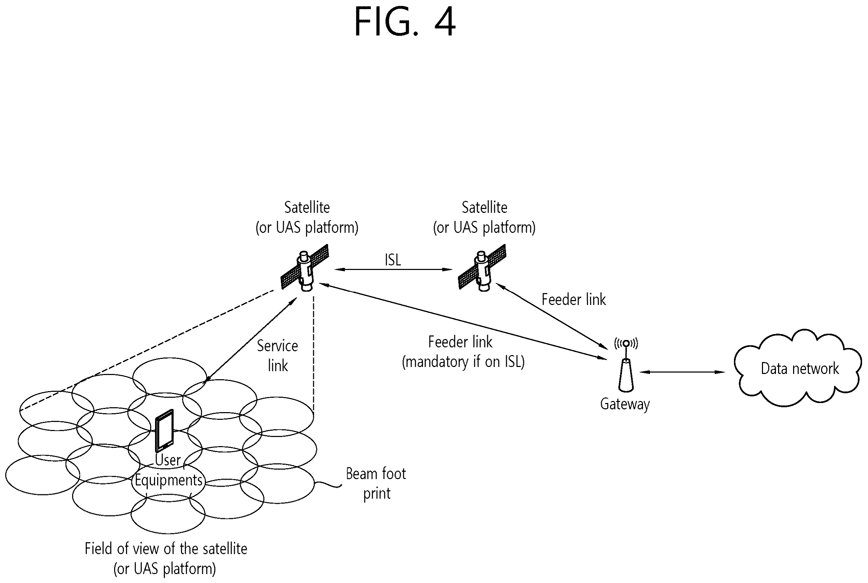

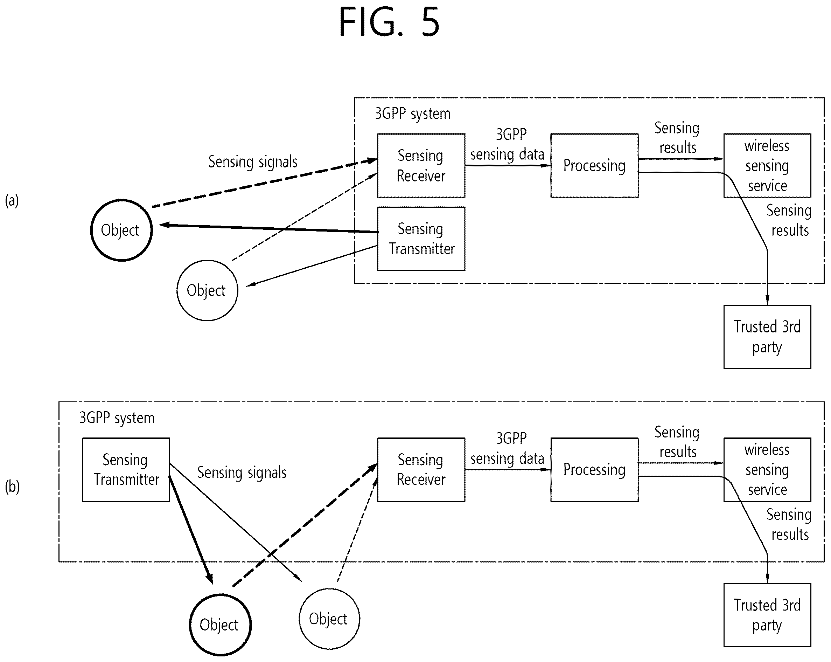

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC _CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

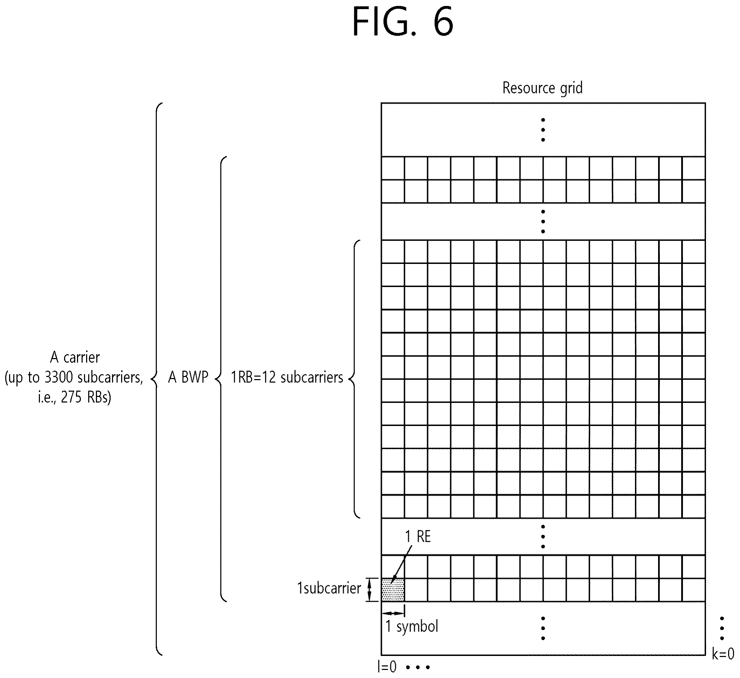

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

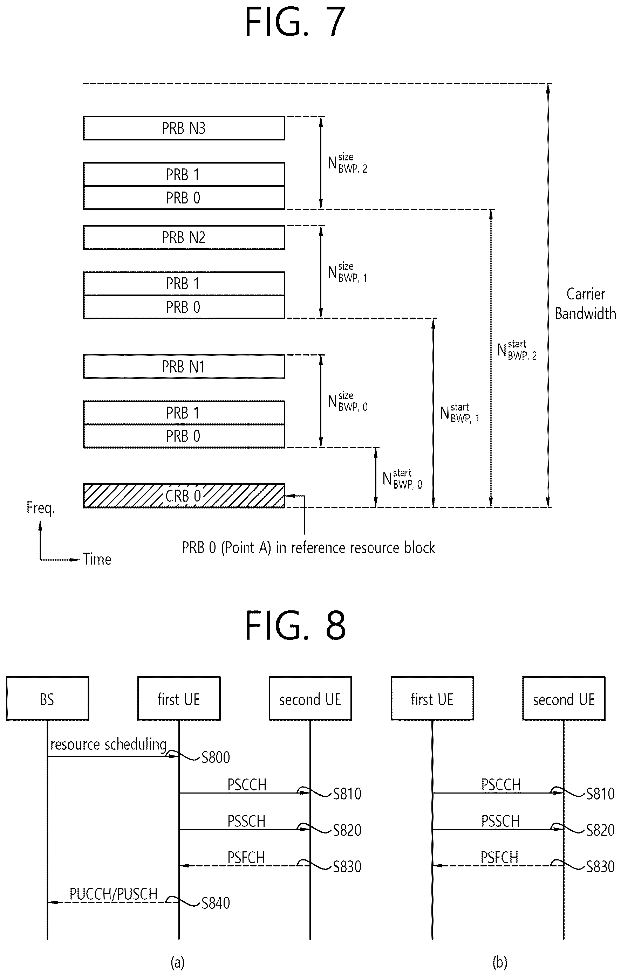

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Meanwhile, in a next system, a UE may perform inter-UE transmission and reception (e.g., SL transmission and reception) through a plurality of inter-UE communication carriers (e.g., SL communication carriers), and a plurality of inter-UE channels (e.g., SL channels) may be simultaneously transmitted or simultaneously received through each inter-UE communication carrier (e.g., SL communication carrier). Through this, the UE may increase a data rate for inter-UE communication (e.g., SL communication) and/or improve detection performance through packet duplication, etc.

Meanwhile, inter-UE transmission and reception (e.g., SL transmission and reception) through a plurality of inter-UE communication carriers (e.g., SL communication carriers) may be linked to different service types and/or quality of service (QoS) per inter-UE communication carrier (e.g., SL communication carrier).

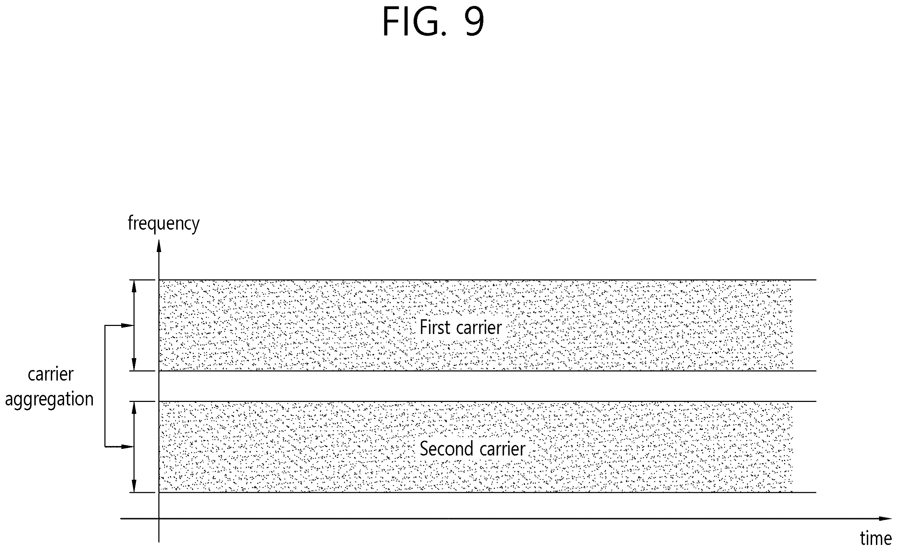

FIG. 9 shows a frequency band in carrier aggregation according to an embodiment of the present disclosure. The embodiment of FIG. 9 may be combined with various embodiments of the present disclosure.

Referring to FIG. 9, a first carrier and a second carrier are shown. For example, when a UE capability allows carrier aggregation, the UE may perform inter-UE communication (e.g., SL communication) by aggregating the first carrier and the second carrier.

For example, in FIG. 9, although the first carrier and the second carrier are separated from each other in a frequency domain, they may actually be located adjacent to each other or may be non-adjacent carriers. Or, for example, the first carrier and the second carrier may have an intra-band relationship with each other, or the first carrier and the second carrier may have an inter-band relationship with each other. For example, regardless of what type of carriers are aggregated, when the first carrier and the second carrier are aggregated, the UE may perform inter-UE communication by simultaneously using the first carrier and the second carrier.

Meanwhile, between different inter-UE communication carriers (e.g., SL communication carriers), aggregated inter-UE communication carriers (e.g., aggregated SL communication carriers), and/or resource pools, a position (or temporal position) of an inter-UE physical feedback channel (e.g., PSFCH) occasion may be aligned.

For example, even when an inter-UE synchronization signal block (e.g., S-SSB) resource is not present in a specific first inter-UE communication carrier (e.g., SL communication carrier) and/or a first aggregated inter-UE communication carrier (e.g., aggregated SL communication carrier), all or part of slot(s) of the first inter-UE communication carrier (e.g., SL communication carrier) that overlap (temporally) with the inter-UE synchronization signal block (e.g., S-SSB) resource existing in another inter-UE communication carrier (e.g., SL communication carrier) and/or another aggregated carrier may be excluded from a target slot set for a resource pool.

For example, for a specific first inter-UE communication carrier (e.g., SL communication carrier) and/or a first aggregated inter-UE communication carrier (e.g., aggregated SL communication carrier), a virtual inter-UE synchronization signal block (e.g., S-SSB) resource may be (pre-)configured, and all or part of the virtual inter-UE synchronization signal block (e.g., S-SSB) resource may be excluded from a target slot set for a resource pool. For example, the virtual inter-UE synchronization signal block (e.g., S-SSB) resource may not be used for actual inter-UE synchronization signal block (e.g., S-SSB) transmission and/or reception.

For example, a UE may expect that, between different inter-UE communication carriers (e.g., SL communication carriers) and/or aggregated inter-UE communication carriers (e.g., aggregated SL communication carriers), an inter-UE available start symbol (e.g., SL available start symbol), the number of inter-UE available symbols (e.g., SL available symbols), and/or a last one of the inter-UE available symbols (e.g., SL available symbols), in a slot are the same.

For example, a UE may expect that, between different inter-UE communication carriers (e.g., SL communication carriers), aggregated inter-UE communication carriers (e.g., aggregated SL communication carriers), and/or aggregated inter-UE bandwidth parts (e.g., aggregated SL BWPs), a numerology, a subcarrier spacing, and/or a cyclic prefix (e.g., CP) length are the same.

For example, although an available start symbol in a slot and/or a number of inter-UE available symbols (e.g., SL available symbols) may be configured differently per carrier between different inter-UE communication carriers (e.g., SL communication carriers) and/or aggregated inter-UE communication carriers (e.g., aggregated SL communication carriers), in a slot including an inter-UE physical feedback channel (e.g., PSFCH) resource, the number of available start symbols in a slot and/or the number of inter-UE available symbols (e.g., SL available symbols) may be aligned to be the same between different inter-UE communication carriers (e.g., SL communication carriers) and/or aggregated inter-UE communication carriers (e.g., aggregated SL communication carriers) whose symbol durations of inter-UE physical channels (e.g., PSCCH/PSSCH) are different.

For example, for a specific inter-UE communication carrier (e.g., SL communication carrier), the number of available start symbols and/or the number of inter-UE available symbols (e.g., SL available symbols) may be configured differently between a first slot set and a second slot set.

And/or, for example, in information for the inter-UE available symbols (e.g., SL available symbols), i) a symbol duration of an inter-UE physical channel (e.g., PSCCH/PSSCH) in a first slot set may be configured to be the same as a symbol duration of an inter-UE physical channel (e.g., PSCCH/PSSCH) of a slot that does not include an inter-UE physical feedback channel (e.g., PSFCH) within another inter-UE communication carrier (e.g., SL communication carrier), and/or ii) a symbol duration of an inter-UE physical channel (e.g., PSCCH/PSSCH) in a second slot set may be configured to be the same as a symbol duration of an inter-UE physical channel (e.g., PSCCH/PSSCH) of a slot that includes an inter-UE physical feedback channel (e.g., PSFCH) within another inter-UE communication carrier (e.g., SL communication carrier).

For example, between different inter-UE communication carriers (e.g., SL communication carriers) and/or aggregated inter-UE communication carriers (e.g., aggregated SL communication carriers), at least one resource pool may be configured such that inter-UE slot (e.g., SL slot) sets are the same with each other (per carrier). That is, for example, between different inter-UE communication carriers (e.g., SL communication carriers) and/or aggregated inter-UE communication carriers (e.g., aggregated SL communication carriers), at least one resource pool may be required to have inter-UE slot (e.g., SL slot) sets that are the same with each other.

For example, the resource pools may be (all) resource pools in which an inter-UE physical feedback channel (e.g., PSFCH) resource is configured.

For example, between different inter-UE communication carriers (e.g., SL communication carriers) and/or aggregated inter-UE communication carriers (e.g., aggregated SL communication carriers), a slot set corresponding to resource pool(s) of each carrier (per carrier) may be time division multiplexed (e.g., TDMed). For example, among the resource pools, an inter-UE physical feedback channel (e.g., PSFCH) resource may be configured in some of the resource pools, and an inter-UE physical feedback channel (e.g., PSFCH) resource may not be configured in the remaining resource pools.

For example, between different inter-UE communication carriers (e.g., SL communication carriers) and/or aggregated inter-UE communication carriers (e.g., aggregated SL communication carriers), a transmission time point of an inter-UE synchronization signal block (e.g., S-SSB) and a reception time point of an inter-UE synchronization signal block (e.g., S-SSB) may be the same. For example, between different inter-UE communication carriers (e.g., SL communication carriers) and/or aggregated inter-UE communication carriers (e.g., aggregated SL communication carriers), time allocation parameters (e.g., sl-SSB-TimeAllocation1, sl-SSB-TimeAllocation2, and/or sl-SSB-TimeAllocation3) related to an inter-UE synchronization block may be the same.

For example, between different inter-UE communication carriers (e.g., SL communication carriers) and/or aggregated inter-UE communication carriers (e.g., aggregated SL communication carriers), a position of DFN#0 and/or SFN#0 may be the same (per carrier).

For example, a UE may expect that a minimum inter-UE physical shared channel (e.g., PSSCH)-to-inter-UE physical feedback channel (e.g., PSFCH) timing is configured to be the same between different inter-UE communication carriers (e.g., SL communication carriers) and/or aggregated inter-UE communication carriers (e.g., aggregated SL communication carriers).

For example, between different inter-UE communication carriers (e.g., SL communication carriers) and/or aggregated inter-UE communication carriers (e.g., aggregated SL communication carriers), a resource period of an inter-UE physical feedback channel (e.g., PSFCH) may be configured to be the same.

For example, for a specific first inter-UE communication carrier (e.g., SL communication carrier) and/or a first aggregated inter-UE communication carrier (e.g., aggregated SL communication carrier), a virtual inter-UE physical feedback channel (e.g., PSFCH) resource may be (pre-)configured, and the virtual inter-UE physical feedback channel (e.g., PSFCH) resource may not be used for actual inter-UE synchronization signal block (e.g., S-SSB) transmission and/or reception.

In various embodiments of the present disclosure, a feature for inter-UE physical feedback channel (e.g., PSFCH) resource configuration may be limited (interpreted) to a configuration for an inter-UE communication carrier (e.g., SL communication carrier) that includes a resource pool in which an inter-UE physical feedback channel (e.g., PSFCH) resource is configured.

Meanwhile, in at least a case of intra-band carrier aggregation (e.g., CA), an inter-UE communication UE (e.g., SL UE) may not be able to simultaneously perform an inter-UE transmission (e.g., SL transmission) operation and an inter-UE reception (e.g., SL reception) operation for different inter-UE communication carriers (e.g., SL communication carriers) at the same time point.

For example, when (re)selecting a resource, a UE may align inter-UE physical channel (e.g., PSCCH/PSSCH) transmission slots as much as possible for a plurality of inter-UE communication carriers (e.g., SL communication carriers) and/or aggregated inter-UE communication carriers (e.g., aggregated SL communication carriers).

For example, when a UE selects an inter-UE physical channel (e.g., PSCCH/PSSCH) transmission resource of a specific inter-UE communication carrier (e.g., SL communication carrier) during a resource (re)selection operation, the UE may preferentially select a resource within an inter-UE physical channel (e.g., PSCCH/PSSCH) slot selected from another inter-UE aggregated carrier (e.g., SL aggregated carrier) and/or a resource pool. Through this, the number of non-monitored slots due to transmission of the UE may be reduced.

For example, in a resource (re)selection operation, a UE may select such that inter-UE physical channel (e.g., PSCCH/PSSCH) transmission slots do not overlap with each other as much as possible, for a plurality of inter-UE communication carriers (e.g., SL communication carriers) and/or aggregated inter-UE communication carriers (e.g., aggregated SL communication carriers).

For example, when a UE selects an inter-UE physical channel (e.g., PSCCH/PSSCH) transmission resource of a specific inter-UE communication carrier (e.g., SL communication carrier) during a resource (re)selection operation, the UE may deprioritize selection of a resource within an inter-UE physical channel (e.g., PSCCH/PSSCH) slot selected from another inter-UE aggregated carrier (e.g., SL aggregated carrier) and/or a resource pool. This may be because, when the UE simultaneously transmits inter-UE channels (e.g., SL channels) through a plurality of carriers, each detection performance may be degraded due to power distribution.

For example, in a resource (re)selection operation, a UE may align inter-UE physical channel (e.g., PSCCH/PSSCH) reception slots as much as possible for a plurality of inter-UE communication carriers (e.g., SL communication carriers) and/or aggregated inter-UE communication carriers (e.g., aggregated SL communication carriers).

For example, in a resource (re)selection operation, a UE may select such that inter-UE physical channel (e.g., PSCCH/PSSCH) transmission slots and inter-UE physical channel (e.g., PSCCH/PSSCH) reception slots do not overlap with each other as much as possible, for a plurality of inter-UE communication carriers (e.g., SL communication carriers) and/or aggregated inter-UE communication carriers (e.g., aggregated SL communication carriers).

For example, in a resource (re)selection operation, a UE may (re)select an inter-UE physical channel (e.g., PSCCH/PSSCH) transmission resource such that an inter-UE physical feedback channel (e.g., PSFCH) transmission time point and an inter-UE physical feedback channel (e.g., PSFCH) reception time point for a plurality of inter-UE communication carriers (e.g., SL communication carriers) and/or aggregated inter-UE communication carriers (e.g., aggregated SL communication carriers) do not overlap with each other as much as possible.

For example, when a UE selects an inter-UE physical channel (e.g., PSCCH/PSSCH) transmission resource of a specific inter-UE communication carrier (e.g., SL communication carrier) during a resource (re)selection operation, the UE may deprioritize selection of a resource within an inter-UE physical channel (e.g., PSCCH/PSSCH) slot in which reception is scheduled from another inter-UE aggregated carrier (e.g., SL aggregated carrier) and/or a resource pool.

For example, when a UE selects an inter-UE physical channel (e.g., PSCCH/PSSCH) transmission resource of a specific inter-UE communication carrier (e.g., SL communication carrier) during a resource (re)selection operation, the UE may prioritize selection of a resource for a case where the UE does not expect an inter-UE physical feedback channel (e.g., PSFCH) transmission at a time point of an inter-UE physical feedback channel (e.g., PSFCH) corresponding to the inter-UE physical shared channel (e.g., PSSCH) (i.e., when an inter-UE physical feedback channel (e.g., PSFCH) transmission is not scheduled).

For example, when a UE receives/detects a preferred resource set for a resource pool within a specific inter-UE communication carrier (e.g., SL communication carrier) from another UE, if the UE performs resource selection for other (a plurality of) inter-UE communication carriers (e.g., SL communication carriers) and/or aggregated inter-UE communication carriers (e.g., aggregated SL communication carriers), the UE may preferentially select, as transmission resources, slot sets in resource pools within each inter-UE communication carrier (e.g., SL communication carrier) that overlap with the preferred resource set or include resources of the preferred resource set.

For example, when a UE receives/detects a non-preferred resource set for a resource pool within a specific inter-UE communication carrier (e.g., SL communication carrier) from another UE, if the UE performs resource selection for other (a plurality of) inter-UE communication carriers (e.g., SL communication carriers) and/or aggregated inter-UE communication carriers (e.g., aggregated SL communication carriers), the UE may either not use, as transmission resources, slot sets in resource pools within each inter-UE communication carrier (e.g., SL communication carrier) that overlap with the non-preferred resource set or include resources of the non-preferred resource set, or deprioritize selection of such resources.

For example, the operation may be applied differently depending on a factor by which the non-preferred resource set is generated. For example, the operation may be limited to being performed when the non-preferred resource set is generated based on an area in which a receiving UE cannot perform inter-UE reception (e.g., SL reception).

In various embodiments of the present disclosure, an operation of a UE may be performed differently according to a combination among a congestion control level, an inter-UE communication carrier (e.g., SL communication carrier) (group), a transmit power level, and/or transmission priority(priorities) of the UE, and/or according to a (pre-)configuration.

According to an embodiment of the present disclosure, for a UE, symbol durations for an inter-UE physical channel (e.g., PSCCH/PSSCH) in the same slot derived from different inter-UE communication carriers (e.g., SL communication carriers) and/or aggregated inter-UE communication carriers (e.g., aggregated SL communication carriers) may all be the same, and/or start symbols may be the same.

For example, for a UE, a time-domain position of an inter-UE physical feedback channel (e.g., PSFCH) resource in the same slot derived from different inter-UE communication carriers (e.g., SL communication carriers) and/or aggregated inter-UE communication carriers (e.g., aggregated SL communication carriers) may be the same.

For example, a slot of an inter-UE physical feedback channel (e.g., PSFCH) of a first inter-UE communication carrier (e.g., SL communication carrier) may not overlap with a slot set of a second inter-UE communication carrier (e.g., SL communication carrier).

For example, an inter-UE physical feedback channel (e.g., PSFCH) slot of a first inter-UE communication carrier (e.g., SL communication carrier) may overlap with a slot set of a second inter-UE communication carrier (e.g., SL communication carrier), wherein an end time point (e.g., symbol) of an inter-UE physical channel (e.g., PSCCH/PSSCH) of the second inter-UE communication carrier (e.g., SL communication carrier) in the slot may be time division multiplexed (e.g., TDMed) with an inter-UE physical feedback channel (e.g., PSFCH) resource (symbol) of the first inter-UE communication carrier (e.g., SL communication carrier). And/or, for example, in such a case, an additional one-symbol gap may exist between a start time point (symbol) of the inter-UE physical feedback channel (e.g., PSFCH) and the end time point (symbol) of the inter-UE physical channel (e.g., PSCCH/PSSCH).

For example, (for a UE), among different inter-UE communication carriers (e.g., SL communication carriers) and/or aggregated inter-UE communication carriers (e.g., aggregated SL communication carriers), derived inter-UE physical feedback channel (e.g., PSFCH) slot sets may all be the same, and/or one inter-UE physical feedback channel (e.g., PSFCH) slot set may be in a form of a superset or a subset of another inter-UE physical feedback channel (e.g., PSFCH) slot set.

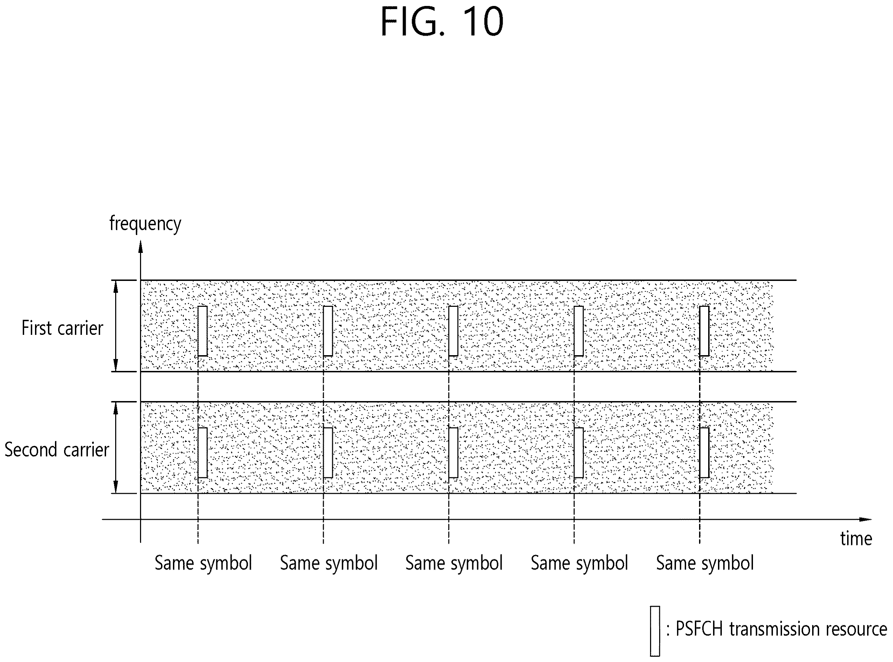

FIG. 10 shows an alignment of inter-UE physical feedback channel (e.g., PSFCH) symbols in carrier aggregation according to an embodiment of the present disclosure. The embodiment of FIG. 10 may be combined with various embodiments of the present disclosure.

Referring to FIG. 10, a first carrier and a second carrier are shown. Herein, it is assumed that carrier aggregation is allowed by a UE capability and that carrier aggregation is performed for the first carrier and the second carrier.

For example, inter-UE physical feedback (e.g., PSFCH) transmission resources may be configured for each of the first carrier and the second carrier. For example, a time unit of the inter-UE physical feedback (e.g., PSFCH) transmission resource may be a symbol. For example, herein, the inter-UE physical feedback (e.g., PSFCH) transmission resources included in the first carrier and the inter-UE physical feedback (e.g., PSFCH) transmission resources included in the second carrier may be aligned. That is, symbols of the inter-UE physical feedback (e.g., PSFCH) transmission resources included in the first carrier and symbols of the inter-UE physical feedback (e.g., PSFCH) transmission resources included in the second carrier may all be the same symbols.

For example, when carrier aggregation is performed for the first carrier and the second carrier, the UE may expect that inter-UE physical feedback (e.g., PSFCH) transmission resources included in the first carrier and the second carrier are aligned. For example, when carrier aggregation is performed for the first carrier and the second carrier, the UE may be configured such that the inter-UE physical feedback (e.g., PSFCH) transmission resources included in the first carrier and the second carrier are aligned.

Herein, if inter-UE physical feedback (e.g., PSFCH) transmission resources included in each carrier in aggregated carriers are not aligned as described above, when inter-UE physical feedback (e.g., PSFCH) transmission is performed on one carrier, an automatic gain control problem may occur on another carrier. That is, since transmit power may suddenly increase at a time point of a specific symbol in a slot, if the inter-UE physical feedback (e.g., PSFCH) transmission resources included in each carrier are not aligned, normal transmit power distribution may be difficult in a slot including the time point on a carrier in which an inter-UE physical feedback (e.g., PSFCH) transmission resource is not configured, and thus normal transmission/reception operation may be difficult. According to various embodiments of the present disclosure, if the inter-UE physical feedback (e.g., PSFCH) transmission resources included in each carrier in aggregated carriers are aligned, the automatic gain control problem as described above may be solved in the aggregated carriers, thereby enabling inter-UE communication through carrier aggregation to be smoothly performed.

For example, a UE may generate/establish a unicast link through a plurality of inter-UE communication carriers (e.g., SL communication carriers), and/or information for the inter-UE communication carriers (e.g., SL communication carriers) may be configured through exchange of inter-UE related information/signaling during generation/establishment of the unicast link.

For example, when a UE establishes a unicast link through a plurality of inter-UE communication carriers (e.g., SL communication carriers), if it is determined that a link quality for a specific inter-UE communication carrier (e.g., SL communication carrier) is less than or equal to a certain level (for example, when the number of discontinuous transmissions (e.g., DTXs) is equal to or greater than, or exceeds, a threshold value that is (pre-)configured or configured through PC5-RRC), and/or when there exists a service type that is provided only in the inter-UE communication carrier (e.g., SL communication carrier), the UE may determine (declare) a radio link failure (RLF) for the unicast link.

For example, a UE may generate/establish a unicast link through a plurality of inter-UE communication carriers (e.g., SL communication carriers), and/or information for the inter-UE communication carriers (e.g., SL communication carriers) may be configured through exchange of inter-UE related information/signaling during generation/establishment of the unicast link.

For example, when a unicast link is established through a plurality of inter-UE communication carriers (e.g., SL communication carriers), if it is determined that a link quality for a specific inter-UE communication carrier (e.g., SL communication carrier) is less than or equal to a certain level (for example, when the number of discontinuous transmissions (e.g., DTXs) is equal to or greater than, or exceeds, a threshold value that is (pre-)configured or configured through PC5-RRC), when a service type supported in the inter-UE communication carrier (e.g., SL communication carrier) is also supported in another inter-UE communication carrier (e.g., SL communication carrier) or an inter-UE aggregated carrier (e.g., SL aggregated carrier), and/or when it is determined that a link quality for the other inter-UE communication carrier (e.g., SL communication carrier) is greater than or equal to, or exceeds a certain level, the UE may withhold/cancel a declaration of a radio link failure (RLF) for the unicast link.

For example, candidate resource that overlap with resource related to a slot in which monitoring for an inter-UE physical channel (e.g., PSCCH and/or PSSCH) have not been performed due to transmission of a UE (the resource(s) in a slot after all or some of resource reservation period value(s) configured for a resource pool from the slot) may be excluded from an available resource set, and/or the monitoring that have not been performed may be limited to being caused by transmission in a resource pool in which resource (re)selection is performed and/or in an inter-UE communication carrier (e.g., SL communication carrier) to which the resource pool belongs.

For example, when an amount (or a number of resources) of an available resource set is less than or equal to, or less than, a certain level (for example, a (pre-)configured threshold value), a UE may preferentially cancel resource exclusion derived from non-monitored slots caused by transmission in another resource pool and/or inter-UE communication carrier (e.g., SL communication carrier) other than an inter-UE resource pool (e.g., SL resource pool) and/or an inter-UE communication carrier (e.g., SL communication carrier) for resource (re)selection.

For example, in resource reselection, a UE may maintain, or prioritize maintaining, an inter-UE communication carrier (e.g., SL communication carrier) and/or a transmission resource pool related to (or including) a previously selected resource.

For example, in resource reselection, a UE may select an inter-UE communication carrier (e.g., SL communication carrier) and/or a transmission resource pool different from an inter-UE communication carrier (e.g., SL communication carrier) and/or a transmission resource pool related to a previously selected resource, and at least a service type and/or quality of service (QoS) supported by the newly selected different inter-UE communication carrier (e.g., SL communication carrier) may be the same as, or partially overlap with, a service type and/or quality of service (QoS) supported by the inter-UE communication carrier (e.g., SL communication carrier) related to the previously selected resource.

For example, when a UE uses (or is configured with) a plurality of aggregated cells, carriers, and/or bandwidth parts for inter-UE communication (e.g., SL communication), the UE may reference, use, or consider, in configuring a resource pool belonging to the plurality of aggregated cells, carriers, and/or bandwidth parts (e.g., BWPs), time division duplex (e.g., TDD) base station-to-UE communication (e.g., UL-DL) configuration (for example, in a form indicating a slot format type such as UE-to-base station (e.g., UL), base station-to-UE (e.g., DL), or flexible) or information for cell-specific UE-to-base station (e.g., UL) slots and/or symbols for a specific cell or carrier.

For example, the specific cell or carrier may be a primary cell, may be a (pre-)configured cell or carrier, and/or may be a cell or carrier in which an inter-UE synchronization signal block (e.g., S-SSB) is transmitted and received or an inter-UE synchronization signal block (e.g., S-SSB) resource is configured.

For example, when a UE uses (or is configured with) a plurality of aggregated cells, carriers, and/or bandwidth parts for inter-UE communication (e.g., SL communication), time division duplex (e.g., TDD) base station-to-UE communication (e.g., UL-DL) configuration for each of the cells or carriers (for example, in a form indicating a slot format type such as UE-to-base station (e.g., UL), base station-to-UE (e.g., DL), or flexible) or information for cell-specific UE-to-base station (e.g., UL) slots and/or symbols may all be the same.

For example, when a UE uses (or is configured with) a plurality of aggregated cells, carriers, and/or bandwidth parts for inter-UE communication (e.g., SL communication), the UE may expect that all or some of slot sets targeted for resource pools for each of the cells or carriers are the same.

Meanwhile, in power control of inter-UE transmission (e.g., SL transmission) between different inter-UE communication carriers (e.g., SL communication carriers) and/or aggregated inter-UE communication carriers (e.g., aggregated SL communication carriers), when a total power is greater than a maximum transmit power of a UE, the UE may reduce power of an inter-UE transmission (e.g., SL transmission) having a lower inter-UE priority (e.g., SL priority) according to the inter-UE priority (e.g., SL priority).

For example, when a UE performs power control of inter-UE transmission (e.g., SL transmission) between different inter-UE communication carriers (e.g., SL communication carriers) and/or aggregated inter-UE communication carriers (e.g., aggregated SL communication carriers), a minimum power of inter-UE transmission(s) (e.g., SL transmission(s)) for each inter-UE communication carrier (e.g., SL communication carrier) and/or inter-UE resource pool (e.g., SL resource pool) may be (pre-)configured.

For example, when a power of inter-UE transmission(s) (e.g., SL transmission(s)) is less than or equal to, or less than, a minimum power, a UE may omit the inter-UE transmission(s) (e.g., SL transmission(s)) and/or may reselect transmission resources for the inter-UE transmission(s) (e.g., SL transmission(s)).

For example, power for inter-UE transmission(s) (e.g., SL transmission(s)) may be guaranteed up to a minimum power, and when a total power is still greater than a maximum transmit power of a UE even after reducing power of an inter-UE transmission (e.g., SL transmission) having a lower inter-UE priority (e.g., SL priority) according to the inter-UE priority (e.g., SL priority), the UE may reduce power of a next lower-priority inter-UE transmission (e.g., SL transmission).

Meanwhile, a UE may simultaneously transmit a plurality of inter-UE physical feedback channels (e.g., PSFCHs) for an inter-UE communication carrier (e.g., SL communication carrier), and a power control scheme for this may be different from a power control scheme for a plurality of inter-UE physical channels (e.g., PSCCH/PSSCH) and/or an inter-UE synchronization signal block (e.g., S-SSB) on a plurality of inter-UE communication carriers (e.g., SL communication carriers).

For example, a UE may calculate a number of inter-UE physical feedback channels (e.g., PSFCHs) to be simultaneously transmitted and/or inter-UE physical feedback channel (e.g., PSFCH) power for a plurality of inter-UE communication carriers (e.g., SL communication carriers) and/or aggregated inter-UE communication carriers (e.g., aggregated SL communication carriers).

For example, as described above, transmission power of each inter-UE physical feedback channel (e.g., PSFCH) may all be the same between different inter-UE communication carriers (e.g., SL communication carriers) and/or aggregated inter-UE communication carriers (e.g., aggregated SL communication carriers).

For example, between different inter-UE communication carriers (e.g., SL communication carriers) and/or aggregated inter-UE communication carriers (e.g., aggregated SL communication carriers), parameters related to power of an inter-UE physical feedback channel (e.g., dl-P0-PSFCH or dl-Alpha-PSFCH) may be configured not to be the same and/or parameters related to power of an inter-UE physical feedback channel having the same value (e.g., dl-P0-PSFCH or dl-Alpha-PSFCH) may be configured.

For example, for each inter-UE communication carrier (e.g., SL communication carrier) and/or aggregated inter-UE communication carrier (e.g., aggregated SL communication carrier), a number of simultaneous transmissions and/or a power value for inter-UE physical feedback channel (e.g., PSFCH) transmission may be determined, and/or after the process, when a total power of simultaneous transmission of inter-UE physical feedback channels (e.g., PSFCHs) for a plurality of inter-UE communication carriers (e.g., SL communication carriers) and/or aggregated inter-UE communication carriers (e.g., aggregated SL communication carriers) is greater than a maximum transmit power of a UE, the UE may reduce power of inter-UE physical feedback channel (e.g., PSFCH) transmission(s) of an inter-UE communication carrier (e.g., SL communication carrier) having a higher inter-UE priority value (e.g., SL priority value) or may omit the transmission based on an inter-UE priority value (e.g., SL priority value) per inter-UE communication carrier (e.g., SL communication carrier) and/or aggregated inter-UE communication carrier (e.g., SL communication carrier).

For example, the reference inter-UE priority value (e.g., SL priority value) may be the largest or the smallest priority value for inter-UE physical feedback channel (e.g., PSFCH) transmission determined in an inter-UE communication carrier (e.g., SL communication carrier).

For example, in omission of inter-UE physical feedback channel (e.g., PSFCH) transmission(s) of the specific inter-UE communication carrier (e.g., SL communication carrier), all inter-UE physical feedback channel (e.g., PSFCH) transmission(s) in the inter-UE communication carrier (e.g., SL communication carrier) may be omitted, and/or transmissions with larger priority values may be omitted first. For example, for inter-UE communication carriers (e.g., SL communication carriers) having the same reference priority value, an inter-UE communication carrier (e.g., SL communication carrier) in which transmit power is to be reduced or transmission is to be omitted may be determined in an order of higher carrier index, lower carrier index, or as determined by the UE.

Various embodiments of the present disclosure may be applied differently depending on whether inter-UE aggregated carriers (e.g., SL aggregated carriers) are contiguous carriers, non-contiguous carriers, inter-band, or intra-band. In such cases, the aggregated inter-UE communication carriers (e.g., SL communication carriers) may be divided into a plurality of groups, and a power control method within a group and a power control scheme between groups may be extended in different forms.

Meanwhile, a maximum transmit power of a UE per inter-UE communication carrier (e.g., SL communication carrier) was determined, in a case of an inter-UE physical channel (e.g., PSCCH/PSSCH), based on a maximum transmit power value (pre-)configured in a resource pool in which the inter-UE physical channel (e.g., PSCCH/PSSCH) is transmitted; in a case of an inter-UE synchronization signal block (e.g., S-SSB), regardless of a maximum transmit power value (pre-)configured in a resource pool; and in a case of simultaneous transmission of inter-UE physical feedback channels (e.g., PSFCHs), based on a sum of maximum transmit power values (pre-)configured in resource pool(s) in which the inter-UE physical feedback channel (e.g., PSFCH) is transmitted.

For example, a maximum transmit power of a UE for inter-UE physical channel (e.g., PSCCH/PSSCH) transmission(s) for a plurality of aggregated inter-UE communication carriers (e.g., aggregated SL communication carriers) may be determined based on a sum of maximum transmit power values (pre-)configured in resource pools to which simultaneously transmitted inter-UE physical channels (e.g., PSCCH/PSSCH) belong.

For example, a maximum transmit power of a UE for inter-UE physical feedback channel (e.g., PSFCH) transmission(s) for a plurality of aggregated inter-UE communication carriers (e.g., aggregated SL communication carriers) may be determined based on a sum of maximum transmit power values (pre-)configured in a resource pool within a single inter-UE communication carrier (e.g., SL communication carrier) and/or resource pools for a plurality of inter-UE communication carriers (e.g., SL communication carriers) to which simultaneously transmitted inter-UE physical feedback channels (e.g., PSFCHs) belong.

For example, a UE capability for a maximum number of inter-UE physical feedback channel (e.g., PSFCH) receptions and/or a maximum number of inter-UE physical feedback channel (e.g., PSFCH) transmissions may be determined per UE, per band, and/or per band combination. For example, in the UE capability for a maximum number of inter-UE physical feedback channel (e.g., PSFCH) receptions and/or a maximum number of inter-UE physical feedback channel (e.g., PSFCH) transmissions, a value for an inter-UE communication carrier (e.g., SL communication carrier) and a value for aggregated inter-UE communication carriers (e.g., aggregated SL communication carriers) or a UE may separately exist.

For example, a UE may determine a target inter-UE physical feedback channel (e.g., PSFCH) according to a first maximum number of inter-UE physical feedback channel (e.g., PSFCH) receptions and/or a first maximum number of inter-UE physical feedback channel (e.g., PSFCH) transmissions per inter-UE communication carrier (e.g., SL communication carrier), and then may finally determine the target inter-UE physical feedback channel (e.g., PSFCH) according to a second maximum number of inter-UE physical feedback channel (e.g., PSFCH) receptions and/or a second maximum number of inter-UE physical feedback channel (e.g., PSFCH) transmissions for aggregated inter-UE communication carriers (e.g., aggregated SL communication carriers).

According to an embodiment of the present disclosure, a UE may determine an inter-UE physical feedback channel (e.g., PSFCH) transmission or an inter-UE physical feedback channel (e.g., PSFCH) reception operation per inter-UE communication carrier (e.g., SL communication carrier) based on a (reference) priority value of the inter-UE physical feedback channel (e.g., PSFCH) (an operation with a smaller reference priority value).

Thereafter, for example, for inter-UE physical feedback channel (e.g., PSFCH) transmission or inter-UE physical feedback channel (e.g., PSFCH) reception determined per inter-UE communication carrier (e.g., SL communication carrier), a UE may finally select inter-UE physical feedback channel (e.g., PSFCH) transmission or inter-UE physical feedback channel (e.g., PSFCH) reception for aggregated inter-UE communication carriers (e.g., aggregated SL communication carriers).

For example, an operation of selecting inter-UE physical feedback channel (e.g., PSFCH) transmission or inter-UE physical feedback channel (e.g., PSFCH) reception for the plurality of aggregated inter-UE communication carriers (e.g., aggregated SL communication carriers) may follow whichever has a larger selected number among inter-UE physical feedback channel (e.g., PSFCH) transmissions and inter-UE physical feedback channel (e.g., PSFCH) receptions determined per inter-UE communication carrier (e.g., SL communication carrier).

For example, when the number of carriers that selected inter-UE physical feedback channel (e.g., PSFCH) transmission (or inter-UE physical feedback channel (e.g., PSFCH) reception) for inter-UE communication carriers (e.g., SL communication carriers) is larger, a UE may select an inter-UE physical feedback channel (e.g., PSFCH) transmission operation (or inter-UE physical feedback channel (e.g., PSFCH) reception operation) for aggregated inter-UE communication carriers (e.g., aggregated SL communication carriers).

For example, when the number of carriers that selected inter-UE physical feedback channel (e.g., PSFCH) transmission and the number of carriers that selected inter-UE physical feedback channel (e.g., PSFCH) reception are the same, a UE may select either an inter-UE physical feedback channel (e.g., PSFCH) transmission operation or an inter-UE physical feedback channel (e.g., PSFCH) reception operation by a UE implementation.

For example, a UE may compare a reference priority value (the smallest value) for inter-UE physical feedback channel (e.g., PSFCH) transmission and a reference priority value (the smallest value) for inter-UE physical feedback channel (e.g., PSFCH) reception for aggregated inter-UE communication carriers (e.g., aggregated SL communication carriers), and may perform an operation corresponding to the smaller value.

For example, for aggregated inter-UE communication carriers (e.g., aggregated SL communication carriers), when a number of inter-UE physical feedback channel (e.g., PSFCH) transmissions is greater than or equal to, or greater than, a certain level (for example, a (pre-)configured value), a UE may prioritize inter-UE physical feedback channel (e.g., PSFCH) transmission over inter-UE physical feedback channel (e.g., PSFCH) reception.

According to an embodiment of the present disclosure, for aggregated inter-UE communication carriers (e.g., aggregated SL communication carriers), when a priority value for inter-UE physical feedback channel (e.g., PSFCH) reception is less than or equal to, or less than, a threshold value that is (pre-)configured and/or configured through PC5-RRC, in case of a conflict between inter-UE physical feedback channel (e.g., PSFCH) transmission and inter-UE physical feedback channel (e.g., PSFCH) reception, a UE may set a priority for inter-UE physical feedback channel (e.g., PSFCH) reception higher than inter-UE physical feedback channel (e.g., PSFCH) transmission.

For example, the process may be performed before and/or after comparison of an inter-UE priority value (e.g., SL priority value) for inter-UE physical feedback channel (e.g., PSFCH) transmission and inter-UE physical feedback channel (e.g., PSFCH) reception.

For example, the process may be performed when a reference priority value for inter-UE physical feedback channel (e.g., PSFCH) transmission and a reference priority value for inter-UE physical feedback channel (e.g., PSFCH) reception are the same.

According to an embodiment of the present disclosure, when inter-UE physical feedback channel (e.g., PSFCH) reception exists in a specific inter-UE communication carrier (e.g., SL communication carrier) among aggregated inter-UE communication carriers (e.g., aggregated SL communication carriers), when the inter-UE physical feedback channel (e.g., PSFCH) reception corresponds to a unicast inter-UE physical shared channel (e.g., PSSCH), and/or when a UE determines a radio link failure (RLF) based on unicast inter-UE feedback (e.g., SL HARQ-ACK feedback), the UE may set a priority for inter-UE physical feedback channel (e.g., PSFCH) reception higher than inter-UE physical feedback channel (e.g., PSFCH) transmission for aggregated inter-UE communication carriers (e.g., aggregated SL communication carriers).

For example, the process may be performed before and/or after comparison of an inter-UE priority value (e.g., SL priority value) for inter-UE physical feedback channel (e.g., PSFCH) transmission and inter-UE physical feedback channel (e.g., PSFCH) reception.

For example, the process may be performed when a reference priority value for inter-UE physical feedback channel (e.g., PSFCH) transmission and a reference priority value for inter-UE physical feedback channel (e.g., PSFCH) reception are the same. For example, the specific inter-UE communication carrier (e.g., SL communication carrier) may be (pre-)configured and/or configured through PC5-RRC.

According to an embodiment of the present disclosure, when inter-UE physical feedback channel (e.g., PSFCH) transmission exists in a specific inter-UE communication carrier (e.g., SL communication carrier) among aggregated inter-UE communication carriers (e.g., aggregated SL communication carriers), when the inter-UE physical feedback channel (e.g., PSFCH) transmission corresponds to a unicast inter-UE physical shared channel (e.g., PSSCH), and/or when a UE (that is to receive the inter-UE physical feedback channel (e.g., PSFCH)) determines a radio link failure (RLF) based on unicast inter-UE feedback (e.g., SL HARQ-ACK feedback), a UE may set a priority for inter-UE physical feedback channel (e.g., PSFCH) transmission higher than inter-UE physical feedback channel (e.g., PSFCH) reception for aggregated inter-UE communication carriers (e.g., aggregated SL communication carriers).

For example, the process may be performed before and/or after comparison of an inter-UE priority value (e.g., SL priority value) for inter-UE physical feedback channel (e.g., PSFCH) transmission and inter-UE physical feedback channel (e.g., PSFCH) reception.

For example, the process may be performed when a reference priority value for inter-UE physical feedback channel (e.g., PSFCH) transmission and a reference priority value for inter-UE physical feedback channel (e.g., PSFCH) reception are the same. For example, the specific inter-UE communication carrier (e.g., SL communication carrier) may be (pre-)configured and/or configured through PC5-RRC.

According to an embodiment of the present disclosure, in the same unicast link, priority setting for the unicast inter-UE physical feedback channel (e.g., PSFCH) transmission and the unicast inter-UE physical feedback channel (e.g., PSFCH) reception may be (pre-)configured and/or configured through PC5-RRC, identically, per UE and/or between UEs.

For example, for a unicast link between UE-1 and UE-2, a priority of unicast inter-UE physical feedback channel (e.g., PSFCH) reception may be set higher than a priority of (unicast) inter-UE physical feedback channel (e.g., PSFCH) transmission for UE-1, and a priority of unicast inter-UE physical feedback channel (e.g., PSFCH) transmission may be set higher than a priority of (unicast) inter-UE physical feedback channel (e.g., PSFCH) reception for UE-2, such that UE-1 may efficiently perform a radio link failure (RLF) declaration based on unicast inter-UE feedback (e.g., SL HARQ-ACK feedback).

Various embodiments of the present disclosure may be applied differently depending on presence or absence of inter-UE feedback (e.g., SL HARQ-ACK feedback) options and/or per congestion control level.

Meanwhile, in power control of inter-UE transmission (e.g., SL transmission) between different inter-UE communication carriers (e.g., SL communication carriers) and/or aggregated inter-UE communication carriers (e.g., aggregated SL communication carriers), when a total power is greater than a maximum transmit power of a UE, the UE could reduce power of an inter-UE transmission (e.g., SL transmission) having a lower inter-UE priority (e.g., SL priority) according to the inter-UE priority (e.g., SL priority).

Meanwhile, a UE may perform UE-to-base station transmission (e.g., UL transmission) through a plurality of UE-to-base station carriers (e.g., UL carriers) and simultaneously perform inter-UE transmission (e.g., SL transmission) through a plurality of inter-UE communication carriers (e.g., SL communication carriers).

For example, when a total transmit power exceeds a maximum transmit power of a UE in simultaneous transmission of inter-UE communication (e.g., SL communication) and UE-to-base station communication (e.g., UL communication) for a plurality of carriers, and/or when inter-UE transmission (e.g., SL transmission) of all inter-UE communication carriers (e.g., SL communication carriers) has a higher priority than UE-to-base station transmission (e.g., UL transmission) of all UE-to-base station carriers (e.g., UL carriers), the UE may reduce transmit power of all or some UE-to-base station transmissions (e.g., UL transmissions) of the UE-to-base station carriers (e.g., UL carriers) so that the sum of the total transmit power becomes less than or equal to the maximum transmit power of the UE.

For example, when the sum of the total transmit power exceeds a maximum transmit power of a UE in simultaneous transmission of inter-UE communication (e.g., SL communication) and UE-to-base station communication (e.g., UL communication) for a plurality of carriers, and/or when inter-UE transmission (e.g., SL transmission) of at least one inter-UE communication carrier (e.g., SL communication carrier) has a higher priority than UE-to-base station transmission (e.g., UL transmission) of all UE-to-base station carriers (e.g., UL carriers), the UE may reduce transmit power of all or some UE-to-base station transmissions (e.g., UL transmissions) of the UE-to-base station carriers (e.g., UL carriers) so that the sum of the total transmit power becomes less than or equal to the maximum transmit power of the UE.

For example, when the sum of the total transmit power exceeds a maximum transmit power of a UE in simultaneous transmission of inter-UE communication (e.g., SL communication) and UE-to-base station communication (e.g., UL communication) for a plurality of carriers, and/or when inter-UE transmission (e.g., SL transmission) of all inter-UE communication carriers (e.g., SL communication carriers) has a higher priority than UE-to-base station transmission (e.g., UL transmission) of at least one UE-to-base station carrier (e.g., UL carrier), the UE may reduce transmit power of all or some UE-to-base station transmissions (e.g., UL transmissions) of the UE-to-base station carriers (e.g., UL carriers) so that the sum of the total transmit power becomes less than or equal to the maximum transmit power of the UE.

For example, when the sum of the total transmit power exceeds a maximum transmit power of a UE in simultaneous transmission of inter-UE communication (e.g., SL communication) and UE-to-base station communication (e.g., UL communication) for a plurality of carriers, and/or when inter-UE transmission (e.g., SL transmission) of at least one inter-UE communication carrier (e.g., SL communication carrier) has a higher priority than UE-to-base station transmission (e.g., UL transmission) of at least one UE-to-base station carrier (e.g., UL carrier), the UE may reduce transmit power of all or some UE-to-base station transmissions (e.g., UL transmissions) of the UE-to-base station carriers (e.g., UL carriers) so that the sum of the total transmit power becomes less than or equal to the maximum transmit power of the UE.

For example, the operation may be performed, for all aggregated inter-UE communication carriers (e.g., aggregated SL communication carriers), in a form of comparing a priority with a UE-to-base station transmission (e.g., UL transmission) for UE-to-base station (e.g., UL) carrier(s) based on a representative priority value (e.g., the minimum value or the maximum value).

For example, when the sum of the total transmit power exceeds a maximum transmit power of a UE in simultaneous transmission of inter-UE communication (e.g., SL communication) and UE-to-base station communication (e.g., UL communication) for a plurality of carriers, and/or when UE-to-base station transmission (e.g., UL transmission) of at least one UE-to-base station carrier (e.g., UL carrier) has a higher priority than inter-UE transmission (e.g., SL transmission) of at least one inter-UE communication carrier (e.g., SL communication carrier), the UE may reduce transmit power of all or some inter-UE transmissions (e.g., SL transmissions) of the inter-UE communication carriers (e.g., SL communication carriers) so that the sum of the total transmit power becomes less than or equal to the maximum transmit power of the UE.

For example, when the sum of the total transmit power exceeds a maximum transmit power of a UE in simultaneous transmission of inter-UE communication (e.g., SL communication) and UE-to-base station communication (e.g., UL communication) for a plurality of carriers, and/or when UE-to-base station transmission (e.g., UL transmission) of at least one UE-to-base station carrier (e.g., UL carrier) has a higher priority than inter-UE transmission (e.g., SL transmission) of all inter-UE communication carriers (e.g., SL communication carriers), the UE may reduce transmit power of all or some inter-UE transmissions (e.g., SL transmissions) of the inter-UE communication carriers (e.g., SL communication carriers) so that the sum of the total transmit power becomes less than or equal to the maximum transmit power of the UE.

For example, when the sum of the total transmit power exceeds a maximum transmit power of a UE in simultaneous transmission of inter-UE communication (e.g., SL communication) and UE-to-base station communication (e.g., UL communication) for a plurality of carriers, and/or when UE-to-base station transmission (e.g., UL transmission) of all UE-to-base station carriers (e.g., UL carriers) has a higher priority than inter-UE transmission (e.g., SL transmission) of at least one inter-UE communication carrier (e.g., SL communication carrier), the UE may reduce transmit power of all or some inter-UE transmissions (e.g., SL transmissions) of the inter-UE communication carriers (e.g., SL communication carriers) so that the sum of the total transmit power becomes less than or equal to the maximum transmit power of the UE.

For example, when the sum of the total transmit power exceeds a maximum transmit power of a UE in simultaneous transmission of inter-UE communication (e.g., SL communication) and UE-to-base station communication (e.g., UL communication) for a plurality of carriers, and/or when UE-to-base station transmission (e.g., UL transmission) of all UE-to-base station carriers (e.g., UL carriers) has a higher priority than inter-UE transmission (e.g., SL transmission) of all inter-UE communication carriers (e.g., SL communication carriers), the UE may reduce transmit power of all or some inter-UE transmissions (e.g., SL transmissions) of the inter-UE communication carriers (e.g., SL communication carriers) so that the sum of the total transmit power becomes less than or equal to the maximum transmit power of the UE.

For example, when the sum of the total transmit power exceeds a maximum transmit power of a UE in simultaneous transmission of inter-UE communication (e.g., SL communication) and UE-to-base station communication (e.g., UL communication) for a plurality of carriers, a UE may set priorities in a descending order as i) inter-UE communication carrier(s) (e.g., SL communication carrier(s)) whose inter-UE transmission (e.g., SL transmission) has a higher priority than UE-to-base station transmission (e.g., UL transmission) of all UE-to-base station carriers (e.g., UL carriers), ii) UE-to-base station carrier(s) (e.g., UL carriers), and iii) other inter-UE communication carrier(s) (e.g., SL communication carrier(s)) (including inter-UE transmission(s) (e.g., SL transmission(s)) whose priority is not higher than a priority of UE-to-base station transmission (e.g., UL transmission) of all UE-to-base station carriers (e.g., UL carriers)), and may reduce transmit power starting from the lower-priority carrier(s) so that the sum of the total transmit power becomes less than or equal to the maximum transmit power of the UE.

Thereafter, for example, the other inter-UE communication carrier(s) (e.g., SL communication carrier(s)) may be divided into inter-UE communication carrier(s) (e.g., SL communication carrier(s)) whose inter-UE transmission (e.g., SL transmission) has a higher priority than UE-to-base station transmission (e.g., UL transmission) of at least one UE-to-base station carrier (e.g., UL carrier), and inter-UE communication carrier(s) (e.g., SL communication carrier(s)) whose inter-UE transmission (e.g., SL transmission) is not higher (or is lower) in priority than UE-to-base station transmission (e.g., UL transmission) of any UE-to-base station carrier (e.g., UL carrier), and thereafter, priorities may also be distinguished in descending order.

For example, when the sum of the total transmit power exceeds a maximum transmit power of a UE in simultaneous transmission of inter-UE communication (e.g., SL communication) and UE-to-base station (e.g., UL) for a plurality of carriers, and/or when the number of inter-UE communication carriers (e.g., SL communication carriers) whose inter-UE transmission (e.g., SL transmission) has a higher priority than UE-to-base station transmission (e.g., UL transmission) of all UE-to-base station carriers (e.g., UL carriers) is greater than or equal to, or greater than, a certain level, the UE may reduce transmit power of all or some UE-to-base station transmissions (e.g., UL transmissions) of the UE-to-base station carriers (e.g., UL carriers) so that the sum of the total transmit power becomes less than or equal to the maximum transmit power of the UE.

For example, when the sum of the total transmit power exceeds a maximum transmit power of a UE in simultaneous transmission of inter-UE communication (e.g., SL communication) and UE-to-base station (e.g., UL) for a plurality of carriers, and/or when the number of inter-UE communication carriers (e.g., SL communication carriers) whose inter-UE transmissions (e.g., SL transmissions) have a higher priority than UE-to-base station transmission (e.g., UL transmission) of all UE-to-base station carriers (e.g., UL carriers) is less than or equal to, or less than, a certain level, the UE may reduce transmit power of all or some inter-UE transmissions (e.g., SL transmissions) of the inter-UE communication carriers (e.g., SL communication carriers) so that the sum of the total transmit power becomes less than or equal to the maximum transmit power of the UE.

For example, the certain level may be a (pre-)configured value, a value configured through PC5-RRC, a number of inter-UE communication carrier(s) (e.g., SL communication carrier(s)) whose inter-UE transmissions (e.g., SL transmissions) have a lower priority than UE-to-base station transmission (e.g., UL transmission) of at least one UE-to-base station carrier (e.g., UL carrier), and/or a sum for the combination thereof.

For example, in a specific situation (for example, a situation in which priorities for inter-UE communication carrier(s) (e.g., SL communication carrier(s)) and UE-to-base station (e.g., UL) carrier(s) are not specified), a UE may, by a UE implementation, reduce transmit power for all or some of the inter-UE communication carrier(s) (e.g., SL communication carrier(s)) and/or all or some of the UE-to-base station (e.g., UL) carrier(s) so that the sum of the total transmit power becomes less than or equal to the maximum transmit power of the UE.

In various embodiments of the present disclosure, in a method of reducing transmit power for inter-UE transmissions (e.g., SL transmissions) of a plurality of inter-UE communication carriers (e.g., SL communication carriers), transmit power of a lower-priority inter-UE transmission (e.g., SL transmission) or inter-UE communication carrier (e.g., SL communication carrier) may be reduced first, and/or may be reduced by the same ratio (equal scaling).

In various embodiments of the present disclosure, in a method of reducing transmit power for UE-to-base station transmissions (e.g., UL transmissions) of a plurality of UE-to-base station carriers (e.g., UL carriers), transmit power of a lower-priority UE-to-base station transmission (e.g., UL transmission) or UE-to-base station carrier (e.g., UL carrier) may be reduced first, and/or may be reduced by the same ratio (equal scaling).

In various embodiments of the present disclosure, a priority determination between an inter-UE transmission (e.g., SL transmission) of one inter-UE communication carrier (e.g., SL communication carrier) and a UE-to-base station transmission (e.g., UL transmission) of another inter-UE communication carrier (e.g., SL communication carrier) may be determined according to a priority value for the inter-UE transmission (e.g., SL transmission), a threshold value of inter-UE priority (e.g., SL priority) for an eMBB UE-to-base station transmission (e.g., UL transmission) and the inter-UE transmission (e.g., SL transmission), whether threshold values of inter-UE priority (e.g., SL priority) for a URLLC UE-to-base station transmission (e.g., UL transmission) and the inter-UE transmission (e.g., SL transmission) exist and their values, an inter-UE channel (e.g., SL channel) type, and/or a UE-to-base station (e.g., UL) channel type.

In various embodiments of the present disclosure, a priority determination between an inter-UE transmission (e.g., SL transmission) of one inter-UE communication carrier (e.g., SL communication carrier) and a UE-to-base station transmission (e.g., UL transmission) of another inter-UE communication carrier (e.g., SL communication carrier) may also operate when a plurality of inter-UE transmissions (e.g., SL transmissions) overlap with a single UE-to-base station transmission (e.g., UL transmission) and/or when a plurality of UE-to-base station transmissions (e.g., UL transmissions) overlap with a single inter-UE transmission (e.g., SL transmission). In such cases, the spirit of the present disclosure may be extended and applied, and/or, depending on a processing time of the UE, a higher-priority one among inter-UE communication (e.g., SL communication) or UE-to-base station communication (e.g., UL communication) for the overlapping transmissions may be prioritized.

For example, in the case of an inter-UE transmission (e.g., SL transmission), when all overlapping UE-to-base station transmissions (e.g., UL transmissions) detected according to a UE processing time are determined to have a higher priority, the inter-UE transmission (e.g., SL transmission) may have a higher priority, and otherwise, the UE-to-base station (e.g., UL) may have a higher priority.

For example, in the case of a UE-to-base station transmission (e.g., UL transmission), when overlapping inter-UE transmissions (e.g., SL transmissions) detected according to a UE processing time are determined to have a higher priority than at least one inter-UE transmission (e.g., SL transmission), the UE-to-base station (e.g., UL) may have a higher priority, and otherwise, the inter-UE transmission (e.g., SL transmission) may have a higher priority.

In various embodiments of the present disclosure, an operation for changing transmit power for UE-to-base station (e.g., UL) carrier(s) and inter-UE communication carrier(s) (e.g., SL communication carrier(s)) may be performed after completion of a power control operation among the UE-to-base station (e.g., UL) carrier(s) when the total power sum is greater than the maximum transmit power value of the UE and/or after completion of a power control operation among the inter-UE communication carrier(s) (e.g., SL communication carrier(s)) when the total power sum is greater than the maximum transmit power value of the UE.

In various embodiments of the present disclosure, an operation for changing transmit power for UE-to-base station (e.g., UL) carrier(s) and inter-UE communication carrier(s) (e.g., SL communication carrier(s)) may be performed before performing a power control operation among the UE-to-base station (e.g., UL) carrier(s) when the total power sum is greater than the maximum transmit power value of the UE and/or before performing a power control operation among the inter-UE communication carrier(s) (e.g., SL communication carrier(s)) when the total power sum is greater than the maximum transmit power value of the UE.

Various embodiments of the present disclosure may be differently applied in the form of a combination of inter-UE communication carrier(s) (e.g., SL communication carrier(s)), inter-UE band(s) (e.g., SL band(s)), a combination of inter-UE aggregated carrier(s) (e.g., SL aggregated carrier(s)), and/or a combination of inter-UE band(s) (e.g., SL band(s)).

Various embodiments of the present disclosure may be differently applied in the form of the combination according to a form of carrier aggregation (e.g., aggregation of adjacent carrier(s), aggregation of non-adjacent carrier(s), and/or intra-band or inter-band).

The comparison of priority between inter-UE communication carrier(s) (e.g., SL communication carrier(s)) and UE-to-base station (e.g., UL) carrier(s), transmission omission, and/or power reduction may be extended to transmission omit and/or reception omit according to UE capability.

Embodiments of the present disclosure may differ and/or may be (pre-)configured per resource pool, transmission inside and/or outside the resource pool, service quality (e.g., QoS) parameter, CAPC, inter-UE priority (e.g., SL priority), inter-UE channel (e.g., SL channel) type, inter-UE bandwidth part (e.g., SL BWP), inter-UE communication carrier(s) (e.g., SL communication carrier(s)), congestion control level, transmission operation or reception operation, transmit power level, transmission start time point, cast type, whether inter-UE feedback (e.g., SL HARQ-ACK feedback) is activated, option related to positive feedback (e.g., HARQ-ACK feedback), and/or number of transmission attempts for the same information or TB.

For example, in various embodiments of the present disclosure, a (pre-)configuration operation may be performed per resource pool, transmission inside and/or outside the resource pool, service quality (e.g., QoS) parameter, inter-UE priority (e.g., SL priority), inter-UE channel (e.g., SL channel) type, inter-UE bandwidth part (e.g., SL BWP), inter-UE communication carrier(s) (e.g., SL communication carrier(s)), congestion control level, transmission operation or reception operation, transmit power level, transmission start time point, cast type, whether inter-UE feedback (e.g., SL HARQ-ACK feedback) is activated, option related to positive feedback (e.g., HARQ-ACK feedback), and/or number of transmission attempts for the same information or transmission block (e.g., TB).

The proposed method may be applied to a device described below. First, a processor (202) of a receiving UE may configure at least one bandwidth part (e.g., BWP). Then, the processor (202) of the receiving UE may control a transceiver (206) of the receiving UE to receive, on at least one bandwidth part (e.g., BWP), an inter-UE physical channel (e.g., PSCCH/PSSCH) and/or a reference signal related to inter-UE communication (e.g., SL communication) from a transmitting UE.

By increasing bandwidth through aggregation among different carrier(s), data rate can be increased and network capacity can be improved. Herein, when a time position of an inter-UE physical feedback channel (e.g., PSFCH) resource among different carrier(s) is aligned or not aligned, or when a position of available symbol(s) related to inter-UE communication (e.g., SL communication) is aligned or not aligned, an automatic gain control (e.g., AGC) issue may occur during a transmit operation of the UE.

According to various embodiments of the present disclosure, among aggregated inter-UE carrier(s) (e.g., aggregated SL carrier(s)) used in inter-UE communication (e.g., SL communication), a start and a length of available symbol(s), a cyclic prefix (e.g., CP), and/or a subcarrier spacing (e.g., SCS) related to inter-UE communication (e.g., SL communication) may be configured the same. Alternatively, for example, the UE may expect that a start and a length of available symbol(s), a cyclic prefix (e.g., CP), and/or a subcarrier spacing (e.g., SCS) between carrier(s) are configured the same (or all or some of them are configured the same) in the carrier(s) included in aggregated carrier(s).

When carrier aggregation according to various embodiments of the present disclosure is used, an automatic gain control issue related to transmission of an inter-UE physical channel (e.g., PSCCH/PSSCH), which may occur among different inter-UE carrier(s), may be resolved. In addition, according to various embodiments of the present disclosure, while a resource period of an inter-UE physical feedback channel is configured independently for inter-UE carrier(s), an automatic gain control issue related to transmission of an inter-UE physical channel (e.g., PSCCH/PSSCH), which may occur according to a position of an inter-UE physical feedback channel (e.g., PSFCH) resource among different carrier(s), may be resolved.

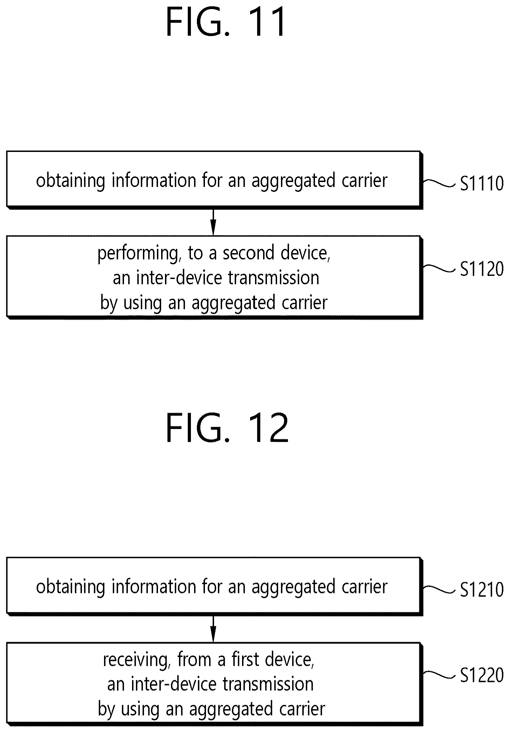

FIG. 11 shows a procedure in which a first device performs wireless communication according to an embodiment of the present disclosure. The embodiment of FIG. 11 may be combined with various embodiments of the present disclosure.

Referring to FIG. 11, in step S1110, a first device may obtain information for an aggregated carrier. In step S1120, the first device may perform, to a second device, an inter-device transmission by using the aggregated carrier. For example, the aggregated carrier may include a first carrier and a second carrier, and first information for a symbol included in the first carrier, which can be used in an inter-device communication may be expected to be configured to be the same as second information for a symbol included in the second carrier, which can be used in an inter-device communication.

For example, the first information may be configured to be the same as the second information.

For example, the first carrier and the second carrier being configured to be with time resource alignment may be expected.

For example, being configured to be with time resource alignment may include the first information and the second information being the same.

For example, the first information may include information for at least one inter-device available symbol.

For example, the information for the at least one inter-device available symbol may include information for a number of the at least one available symbol or information for a position of a last symbol among the at least one inter-device available symbol.

For example, the first information may include information for a position of an inter-device physical feedback slot within a slot.

For example, a position within a slot of a first inter-device physical feedback channel symbol related to the first carrier may be the same as a position within a slot of a second inter-device physical feedback channel symbol related to the second carrier, based on the first information being configured to be the same as the second information.

For example, a first inter-device physical feedback channel symbol related to the first carrier may be not overlapped with an inter-device transmission slot related to the second carrier.

For example, third information related to the first carrier may be expected to be configured to be the same as fourth information related to the second carrier.

For example, the third information may include at least one of information for numerology, information for subcarrier spacing, or information for cyclic prefix.

For example, the third information may include information for a time domain position of an inter-device synchronization signal block resource, and a time domain position of a first inter-device synchronization signal block resource related to the first carrier may be the same as a time domain position of a second inter-device synchronization signal block resource related to the second carrier.

For example, the third information may include information for a minimum interval between an inter-device physical shared channel and an inter-device physical feedback channel, and a first minimum time interval between an inter-device physical shared channel and an inter-device physical feedback channel related to the first carrier may be the same as a second minimum time interval between an inter-device physical shared channel and an inter-device physical feedback channel related to the second carrier.

The above-described embodiment may be applied to various devices described below. For example, a processor 102 of a first device 100 may obtain information for an aggregated carrier. And, the processor 102 of the first device 100 may control a transceiver 106 to perform, to a second device 200, an inter-device transmission by using the aggregated carrier. For example, the aggregated carrier may include a first carrier and a second carrier, and first information for a symbol included in the first carrier, which can be used in an inter-device communication may be expected to be configured to be the same as second information for a symbol included in the second carrier, which can be used in an inter-device communication.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: obtaining information for an aggregated carrier; and performing, to a second device, an inter-device transmission by using the aggregated carrier, wherein the aggregated carrier may include a first carrier and a second carrier, and wherein first information for a symbol included in the first carrier, which can be used in an inter-device communication may be expected to be configured to be the same as second information for a symbol included in the second carrier, which can be used in an inter-device communication.

For example, the first information may be configured to be the same as the second information.

For example, the first carrier and the second carrier being configured to be with time resource alignment may be expected.

For example, being configured to be with time resource alignment may include the first information and the second information being the same.

For example, the first information may include information for at least one inter-device available symbol.

For example, the information for the at least one inter-device available symbol may include information for a number of the at least one available symbol or information for a position of a last symbol among the at least one inter-device available symbol.

For example, the first information may include information for a position of an inter-device physical feedback slot within a slot.

For example, a position within a slot of a first inter-device physical feedback channel symbol related to the first carrier may be the same as a position within a slot of a second inter-device physical feedback channel symbol related to the second carrier, based on the first information being configured to be the same as the second information.

For example, a first inter-device physical feedback channel symbol related to the first carrier may be not overlapped with an inter-device transmission slot related to the second carrier.

For example, third information related to the first carrier may be expected to be configured to be the same as fourth information related to the second carrier.

For example, the third information may include at least one of information for numerology, information for subcarrier spacing, or information for cyclic prefix.

For example, the third information may include information for a time domain position of an inter-device synchronization signal block resource, and a time domain position of a first inter-device synchronization signal block resource related to the first carrier may be the same as a time domain position of a second inter-device synchronization signal block resource related to the second carrier.

For example, the third information may include information for a minimum interval between an inter-device physical shared channel and an inter-device physical feedback channel, and a first minimum time interval between an inter-device physical shared channel and an inter-device physical feedback channel related to the first carrier may be the same as a second minimum time interval between an inter-device physical shared channel and an inter-device physical feedback channel related to the second carrier.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: obtaining information for an aggregated carrier; and performing, to a second UE, an inter-UE transmission by using the aggregated carrier, wherein the aggregated carrier may include a first carrier and a second carrier, and wherein first information for a symbol included in the first carrier, which can be used in an inter-UE communication may be expected to be configured to be the same as second information for a symbol included in the second carrier, which can be used in an inter-UE communication.

According to an embodiment of the present disclosure, a non-transitory computer-readable storage medium storing instructions may be proposed. For example, the instructions, based on being executed, may cause a first device to: obtain information for an aggregated carrier; and perform, to a second device, an inter-device transmission by using the aggregated carrier, wherein the aggregated carrier may include a first carrier and a second carrier, and wherein first information for a symbol included in the first carrier, which can be used in an inter-device communication may be expected to be configured to be the same as second information for a symbol included in the second carrier, which can be used in an inter-device communication.

FIG. 12 shows a procedure in which a second device performs wireless communication according to an embodiment of the present disclosure. The embodiment of FIG. 12 may be combined with various embodiments of the present disclosure.

Referring to FIG. 12, in step S1210, a second device may obtain information for an aggregated carrier. In step S1220, the second device may receive, from a first device, an inter-device transmission by using the aggregated carrier. For example, the aggregated carrier may include a first carrier and a second carrier, and first information for a symbol included in the first carrier, which can be used in inter-device communication may be expected to be configured to be the same as second information for a symbol included in the second carrier, which can be used in inter-device communication.

For example, the first carrier and the second carrier being configured to be with time resource alignment may be expected.

The above-described embodiment may be applied to various devices described below. For example, a processor 202 of a second device 200 may obtain information for an aggregated carrier. And, the processor 202 of the second device 200 may control a transceiver 206 to receive, from a first device 100, an inter-device transmission by using the aggregated carrier. For example, the aggregated carrier may include a first carrier and a second carrier, and first information for a symbol included in the first carrier, which can be used in inter-device communication may be expected to be configured to be the same as second information for a symbol included in the second carrier, which can be used in inter-device communication.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: obtaining information for an aggregated carrier; and receiving, from a first device, an inter-device transmission by using the aggregated carrier, wherein the aggregated carrier may include a first carrier and a second carrier, and wherein first information for a symbol included in the first carrier, which can be used in inter-device communication may be expected to be configured to be the same as second information for a symbol included in the second carrier, which can be used in inter-device communication.

For example, the first carrier and the second carrier being configured to be with time resource alignment may be expected.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

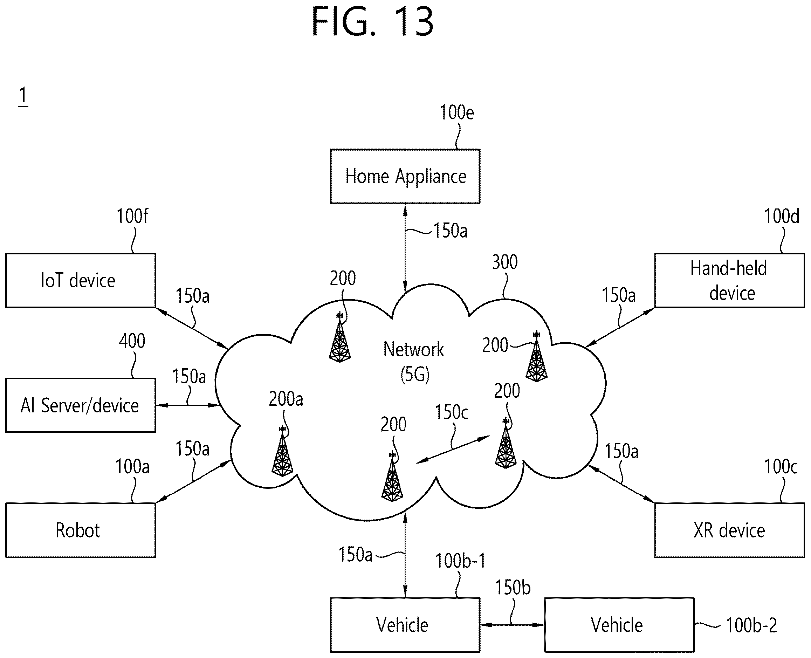

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB 1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

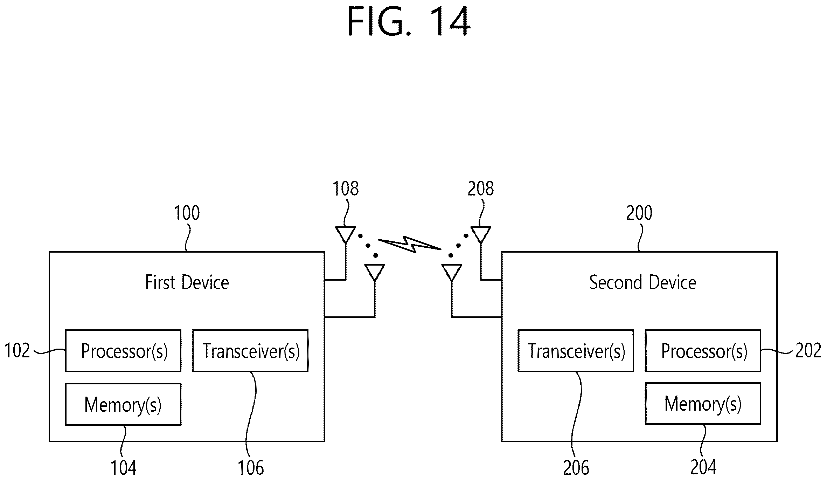

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

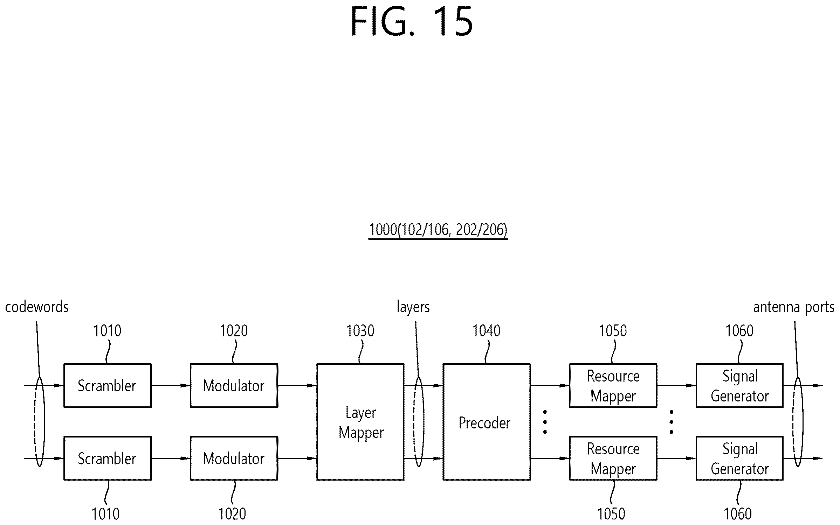

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

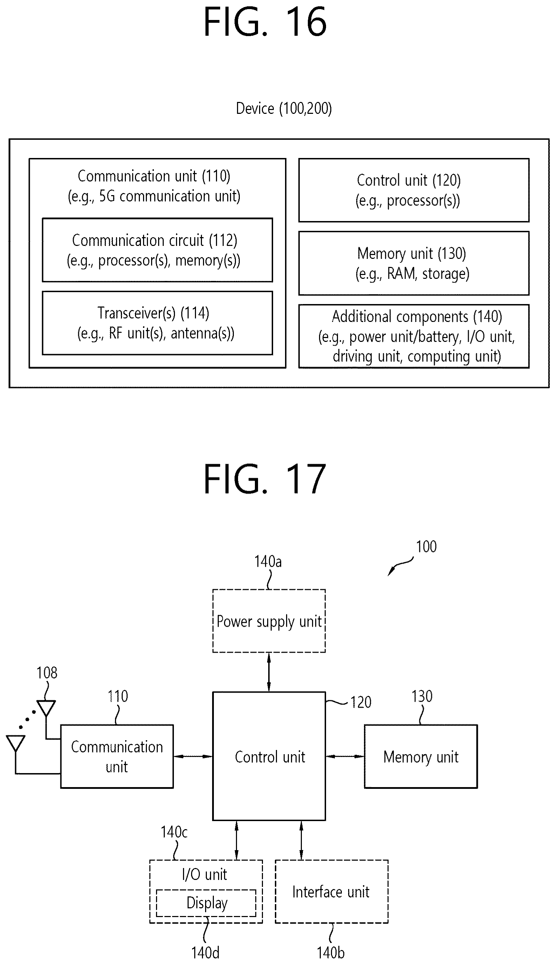

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

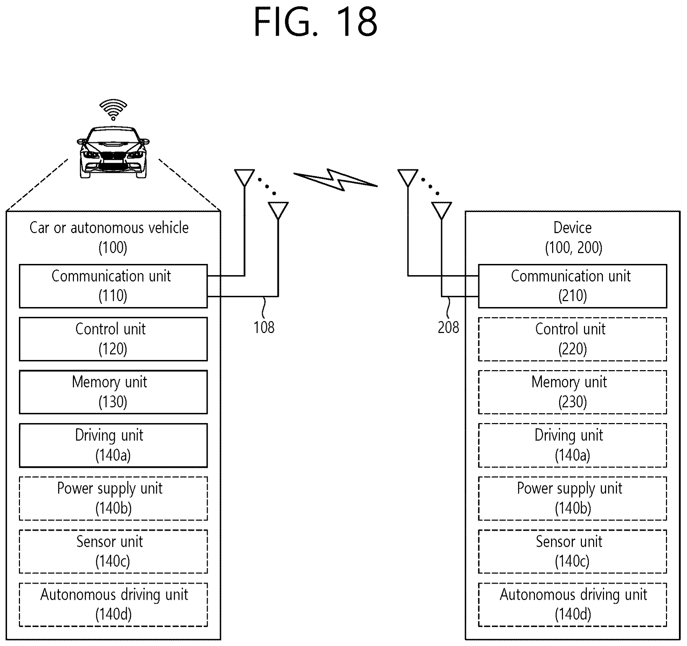

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing, by a first device, wireless communication, the method comprising:
obtaining information for an aggregated carrier; and
performing, to a second device, an inter-device transmission by using the aggregated carrier,
wherein the aggregated carrier includes a first carrier and a second carrier, and
wherein first information for a symbol included in the first carrier, which can be used in an inter-device communication is expected to be configured to be the same as second information for a symbol included in the second carrier, which can be used in an inter-device communication.

2. The method of claim 1, wherein the first information is configured to be the same as the second information.

3. The method of claim 1, wherein the first carrier and the second carrier being configured to be with time resource alignment is expected.

4. The method of claim 3, wherein being configured to be with time resource alignment includes the first information and the second information being the same.

5. The method of claim 1, wherein the first information includes information for at least one inter-device available symbol.

6. The method of claim 5, wherein the information for the at least one inter-device available symbol includes information for a number of the at least one available symbol or information for a position of a last symbol among the at least one inter-device available symbol.

7. The method of claim 1, wherein the first information includes information for a position of an inter-device physical feedback slot within a slot.

8. The method of claim 7, wherein a position within a slot of a first inter-device physical feedback channel symbol related to the first carrier is the same as a position within a slot of a second inter-device physical feedback channel symbol related to the second carrier, based on the first information being configured to be the same as the second information.

9. The method of claim 7, wherein a first inter-device physical feedback channel symbol related to the first carrier is not overlapped with an inter-device transmission slot related to the second carrier.

10. The method of claim 1, wherein third information related to the first carrier is expected to be configured to be the same as fourth information related to the second carrier.

11. The method of claim 10, wherein the third information includes at least one of information for numerology, information for subcarrier spacing, or information for cyclic prefix.

12. The method of claim 10, wherein the third information includes information for a time domain position of an inter-device synchronization signal block resource, and
wherein a time domain position of a first inter-device synchronization signal block resource related to the first carrier is the same as a time domain position of a second inter-device synchronization signal block resource related to the second carrier.

13. The method of claim 10, wherein the third information includes information for a minimum interval between an inter-device physical shared channel and an inter-device physical feedback channel, and
wherein a first minimum time interval between an inter-device physical shared channel and an inter-device physical feedback channel related to the first carrier is the same as a second minimum time interval between an inter-device physical shared channel and an inter-device physical feedback channel related to the second carrier.

14. A first device for performing wireless communication, the first device comprising:
at least one transceiver;
at least one processor; and
at least one memory operably connected to the at least one processor and storing instructions that, based on being executed by the at least one processor, cause the first device to perform operations,
wherein the operations comprise:
obtaining information for an aggregated carrier; and
performing, to a second device, an inter-device transmission by using the aggregated carrier,
wherein the aggregated carrier includes a first carrier and a second carrier, and
wherein first information for a symbol included in the first carrier, which can be used in an inter-device communication is expected to be configured to be the same as second information for a symbol included in the second carrier, which can be used in an inter-device communication.

15. A device adapted to control a first user equipment, UE, the device comprising:
at least one processor; and
at least one memory operably connected to the at least one processor and storing instructions that, based on being executed by the at least one processor, cause the first UE to perform operations,
wherein the operations comprise:
obtaining information for an aggregated carrier; and
performing, to a second UE, an inter-UE transmission by using the aggregated carrier,
wherein the aggregated carrier includes a first carrier and a second carrier, and
wherein first information for a symbol included in the first carrier, which can be used in an inter-UE communication is expected to be configured to be the same as second information for a symbol included in the second carrier, which can be used in an inter-UE communication.

16. A non-transitory computer-readable storage medium storing instructions that, based on being executed, cause a first device to:
obtain information for an aggregated carrier; and
perform, to a second device, an inter-device transmission by using the aggregated carrier,
wherein the aggregated carrier includes a first carrier and a second carrier, and
wherein first information for a symbol included in the first carrier, which can be used in an inter-device communication is expected to be configured to be the same as second information for a symbol included in the second carrier, which can be used in an inter-device communication.

17. A method for performing, by a second device, wireless communication, the method comprising:
obtaining information for an aggregated carrier; and
receiving, from a first device, an inter-device transmission by using the aggregated carrier,
wherein the aggregated carrier includes a first carrier and a second carrier, and
wherein first information for a symbol included in the first carrier, which can be used in inter-device communication is expected to be configured to be the same as second information for a symbol included in the second carrier, which can be used in inter-device communication.

18. The method of claim 17, wherein the first carrier and the second carrier being configured to be with time resource alignment is expected.

19. A second device for performing wireless communication, the second device comprising:
at least one transceiver;
at least one processor; and
at least one memory operably connected to the at least one processor and storing instructions that, based on being executed by the at least one processor, cause the second device to perform operations,
wherein the operations comprise:
obtaining information for an aggregated carrier; and
receiving, from a first device, an inter-device transmission by using the aggregated carrier,
wherein the aggregated carrier includes a first carrier and a second carrier, and
wherein first information for a symbol included in the first carrier, which can be used in inter-device communication is expected to be configured to be the same as second information for a symbol included in the second carrier, which can be used in inter-device communication.

20. The second device of claim 19, wherein the first carrier and the second carrier being configured to be with time resource alignment is expected.
